# EUROPÄISCHE PATENTSCHRIFT

(11) **EP 0 927 424 B1**
(45) Veröffentlichungstag und Bekanntmachung des Hinweises auf die Patenterteilung: **25.09.2002**
(21) Anmeldenummer: 97944870.1
(22) Anmeldetag: 10.09.1997
(51) Int. Cl.: G21C 9/016

(54) **AUFFANGEINRICHTUNG ZUR AUFNAHME HOCHERHITZTER, ZUMINDEST TEILWEISE FLIESSFÄHIGER MATERIALIEN, WIE Z.B. FLÜSSIGKEITEN, SCHLACKEN, SCHMELZEN UND DGL., INSBESONDERE SCHMELZEAUFFÄNGEREINRICHTUNG FÜR KERNKRAFTWERKE**
COLLECTOR FOR HIGHLY HEATED, AT LEAST PARTIALLY FLUID MATERIALS, SUCH AS LIQUIDS, SLAGS, MOLTEN MASSES AND THE LIKE, IN PARTICULAR MOLTEN MASS COLLECTOR FOR NUCLEAR POWER STATIONS
DISPOSITIF COLLECTEUR DESTINE A RECUEILLIR DES MATERIAUX AU MOINS PARTIELLEMENT FLUIDES FORTEMENT CHAUFFES, TELS QUE DES LIQUIDES, SCORIES, MELANGES FONDUS ET ANALOGUE, EN PARTICULIER DISPOSITIF COLLECTEUR DE MATIERES EN FUSION POUR CENTRALES NUCLEAIRES

(30) Priorität: 23.09.1996 DE 19638980
(43) Veröffentlichungstag der Anmeldung: 07.07.1999
(73) Patentinhaber: Framatome ANP GmbH, 91050 Erlangen (DE)
(72) Erfinder: KOLEV, Nikolay, D-91074 Herzogenaurach (DE)
(74) Vertreter: Tergau & Pohl Patentanwälte
(86) Internationale Anmeldenummer: EP9704958
(87) Internationale Veröffentlichungsnummer: WO98013830

(56) Entgegenhaltungen:
- EP-A- 0 392 604
- DE-A- 19 524 882
- US-A- 5 307 390
- DATABASE WPI Section PQ, Week 9522 Derwent Publications Ltd., London, GB; Class Q79, AN 95-168547 XP002048489 & SU 1 077 430 A (RUSAK V N) , 15.September 1994
- PATENT ABSTRACTS OF JAPAN vol. 006, no. 054 (C-097), 9.April 1982 & JP 56 166313 A (NIPPON STEEL CORP), 21.Dezember 1981,

## Beschreibung

Die Erfindung betrifft eine Auffangeinrichtung zur Aufnahme hocherhitzter, zumindest teilweise fließfähiger Materialien. Unter solchen Materialien werden Flüssigkeiten, Schlacken, Schmelzen und dergleichen verstanden. Insbesondere ist der Kernkraftwerkbereich angesprochen, weswegen die Erfindung auch eine Schmelzeauffängereinrichtung für Hochtemperaturschmelze aus dem Reaktorbereich von Kernkraftwerken umfasst.

Aus der DE 195 24 882 A1 ist eine Vorrichtung zur Rückgewinnung eines geschmolzenen Reaktorkerns bekannt, welche modular aus feuerfesten Steinen ausgebildet ist. Die Vorrichtung weist dabei voneinander abgegrenzte Zellen zum Auffangen einer Kernschmelze auf.

Aus der EP 0 392 604 A1 ist eine unterhalb eines Reaktordruckbehälters angeordnete Auffangeinrichtung zu entnehmen. Diese ist gebildet durch schichtweise übereinander angeordnete Balken und ist überdeckt von einer Kühlflüssigkeit. Die einzelnen schichtweisen Balken fangen im Falle eines Störfalls die Kernschmelze auf unterschiedlichen Ebenen auf.

Weiterhin werden zur Sicherheitsverbesserung bei Kernkraftwerken für den unwahrscheinlichsten Fall des Schmelzen des Reaktordruckbehälters infolge eines Reaktorstörfalls Schmelzeauffängereinrichtungen vorgesehen, die mindestens eine im wesentlichen horizontal verlaufende Ausbreitungsfläche aufweisen, die unter einem die hocherhitzten Materialien abgebende Element, beispielsweise dem Reaktordruckbehälter eines Kernkraftwerks angeordnet ist. Grundsätzlich soll sich aus dem Reaktordruckbehälter ergießende Schmelze zunächst in einer solchen Schmelzeauffängereinrichtung eingeschlossen werden, um dort in einen langfristig stabil kühlbaren Zustand gebracht werden zu können. Als Problem hat sich dabei herausgestellt, daß es nicht mit Sicherheit ausgeschlossen werden kann, daß auf solchen Ausbreitungsflächen Wasser in Form eines Wasserfilms geringer Schichtdicke vorhanden ist. Ergießt sich nun im Unglücksfall Schmelze aus dem Druckbehälter auf die Ausbreitungsfläche, dann ist die Schmelzeausbreitung mit einer zumindest teilweisen Verdrängung des auf der Ausbreitungsfläche befindlichen Wasserfilms verbunden. Dabei kommt es zu heftigen hochenergetischen Dampfexplosionen, die eine Gefährdung für die apparativen und baulichen Strukturen eines Kernkraftwerkes darstellen können.

Auch in anderen Bereichen, wie z.B. der Hüttentechnik, können ähnlich gelagerte Fälle auftreten, deshalb sind die angesprochenen Schmelzeauffängereinrichtungen auch in solchen und ähnlichnen technischen Anwendungsbereichen anwendbar.

Der Erfindung liegt die Aufgabe zugrunde, eine Auffangeinrichtung mit den Merkmalen des Oberbegriffs des Patentanspruchs 1 derart weiterzubilden, daß bei ihrem Einsatz mit Sicherheit hochenergetische Dampfexplosionen vermieden werden. Diese Aufgabe wird durch die kennzeichnenden Merkmale des Patentanspruchs 1 gelöst. Vorteilhafte Weiterbildungen der Erfindung ergeben sich aus den nachfolgenden Unteransprüchen 2 - 15.

Als Kern der Erfindung wird es angesehen, auf der Ausbreitungsfläche eine Mehrzahl von lokalen oder lokal begrenzten Strömungshindernissen oder Strömungsstörstellen für das sich auf der Ausbreitungsfläche bewegende hocherhitzte Material vorzusehen. Die Strömungshindernisse oder Strömungsstörstellen müssen geeignet sein, im Falle eines auf der Ausbreitungsfläche befindlichen Wasserfilms infolge einer lokalen Verwirbelung und Vermischung des Materials mit Wasser oder dergleichen lokale, d.h. niedrig-energetische Dampfexplosionen herbeizuführen.

Als allgemeines Erfindungsprinzip läßt sich damit anführen, daß große Dampfexplosionen dadurch vermieden werden sollen, daß kleine, niedrig energetische Dampfexplosionen gezielt provoziert werden, was durch die solche Dampfexplosionen auslösenden Strömungshindernisse möglich ist, die auch als sogenannte "Trigger" bezeichnet werden können.

Gemäß Patentanspruch 2 soll die Ausbreitungsfläche durch eine wannenartige Berandung begrenzt sein. Unter wannenartiger Berandung wird zum einen ein umlaufender, d.h. über die Ebene der Ausbreitungsfläche hochstehender Rand verstanden, so daß Ausbreitungsfläche und Rand quasi eine Wanne bilden, zum anderen kann eine wannenartige Berandung auch eine umlaufende Auffangmulde sein, die für sich eine "ringförmige wannenartige Berandung" bildet. Beide Möglichkeiten einer solchen äußeren Begrenzung der Ausbreitungsfläche fallen in den Rahmen der Erfindung.

Es kann vorteilhaft sein, die Strömungshindernisse auf der Ausbreitungsoberfläche in einem regelmäßigen Raster anzuordnen, um die Anzahl und Intensität der sich im Störungsfall ergebenden Dampfexplosionen gleichmäßig über die Ausbreitungsoberfläche bzw. im Falle eines Kernkraftwerks gleichmäßig unter dem Reaktordruckbehälter zu verteilen. Dadurch werden starke, lokal wirkende Explosionsbelastungen vermieden. Erstreckt sich die Schmelzeauffängereinrichtung seitlich über den Bereich eines empfindlichen Elements hinaus, kann es auch zweckdienlich sein, beispielsweise im Randbereich der Ausbreitungsfläche oder im Bereich der Berandung andere Abstände zwischen den Strömungshindernissen vorzusehen als im Zentralbereich der Ausbreitungsfläche. Dies hängt von den baulichen Einzelheiten der zu schützenden Anlage ab.

Die Strömungshindernisse können mit dem Material der Ausbreitungsfläche einstückig ausgebildet sein. Es kann sich aber auch als vorteilhaft erweisen, wenn die Strömungshindernisse auf die Ausbreitungsfläche als gesonderte Elemente aufgesetzt und mit dieser gegebenenfalls lösbar verbunden sind. Je nach Strömungsverhältnissen sollen die Strömungshindernisse unterschiedliche Dimensionen oder Höhen aufweisen können. Einzelheiten werden sich für den Fachmann aus der genauen Form der Ausbreitungsfläche ergeben, insbesondere aus der Frage, in welchen Bereichen der Ausbreitungsfläche sich bevorzugt ein Wasserfilm anlagert.

Patentansprüche 8 - 10 beschreiben unterschiedliche Ausbildungen der Strömungshindernisse. Patentansprüche 12ff gehen von der Überlegung aus, daß auch eine Mulde in der Ausbreitungsfläche für das sich darauf fließend ausbreitende Material ein Strömungshindernis bzw. eine "Störstelle" darstellt, da sich aufgrund der inneren Reibung einer zähen Flüssigkeit bzw. Schmelze eine Verwirbelung ausbildet, wenn sich ein solcher Materialfilm über eine Mulde schiebt. Ferner wird sich in den Mulden bevorzugt das Wasser des Wasserfilms ansammeln, so daß durch Ausmuldungen lokale Dampfexplosionen gezielt provoziert werden können, wodurch im wesentlichen derselbe Effekt erreicht wird wie durch aus der Ebene herausstehende Strömungshindernisse.

Patentanspruch 15 beschreibt eine Kombination der Strömungshindernisse in Form von Ausmuldungen mit darin vorgesehenen Erhebungen.

Die Erfindung ist anhand vorteilhafter Ausführungsbeispiele näher erläutert. Diese zeigen:
- FIG 1: eine schematische Seitenansicht einer Auffangeinrichtung mit einer Mehrzahl von Strömungshindernissen;
- FIG 2: eine Auffangeinrichtung gemäß FIG 1 mit von Schmelze eingeschlossenen Wasserbereichen;
- FIG 3: eine schematische Draufsicht auf eine Auffangeinrichtung mit leistenartigen Strömungshindernissen;
- FIG 4: eine schematische Draufsicht auf eine Auffangeinrichtung mit winkelartigen Strömungshindernissen;
- FIG 5: eine schematische Draufsicht auf eine Auffangeinrichtung mit würfelartigen Strömungshindernissen in regelmäßiger Anordnung;
- FIG 6: eine schematische Draufsicht auf eine Auffangeinrichtung mit würfelartigen Strömungshindernissen mit bereichsweise unterschiedlichen Abständen;
- FIG 7: eine Auffangeinrichtung mit Ausmuldungen als Strömungshindernisse.

Die in den Zeichnungsfiguren dargestellte Auffangeinrichtung 1 dient zur Aufnahme z.B. von Hochtemperaturschmelze 2 aus dem Reaktorbereich von Kernkraftwerken und weist eine horizontale Ausbreitungsfläche 3 auf, die so angeordnet ist, daß im Störfall aus einem Reaktordruckbehälter austretende Hochtemperaturschmelze 2 sicher abgefangen und aufgenommen wird.

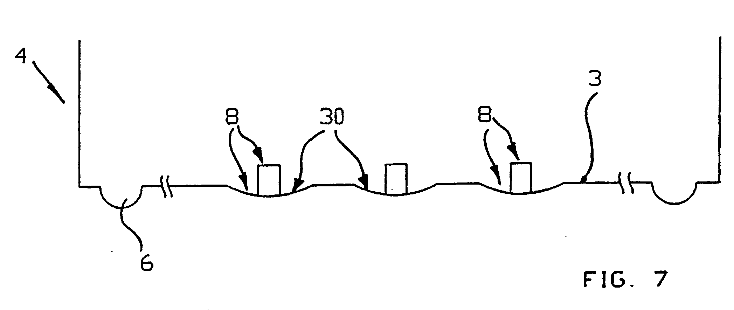

Die Ausbreitungsfläche 3 ist von einer wannenartigen Berandung 4 umgeben, die bei den Zeichnungsfiguren 1 - 6 als über die Ausbreitungsfläche 3 hochstehender Rand 5, bei FIG 7 als umlaufende Rinne 6 ausgebildet ist. Die wannenartige Berandung 4 muß so beschaffen und dimensioniert sein, daß aufgenommene Schmelze den Bereich der Ausbreitungsfläche 3 nicht verlassen kann.

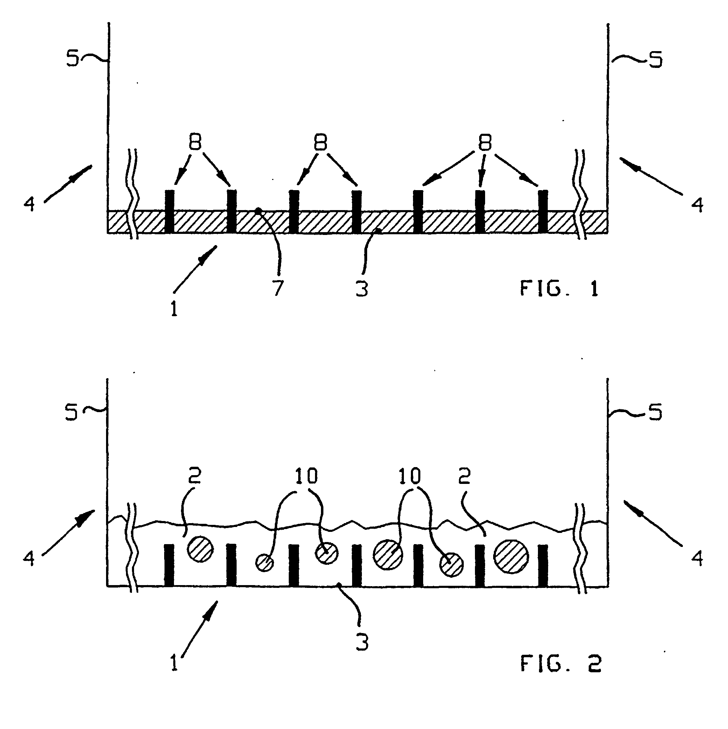

In FIG 1 ist mit Bezugsziffer 7 ein Wasserfilm bezeichnet, der sich über die Ausbreitungsfläche 3 gelegt hat.

Auf der Ausbreitungsfläche 3 ist ferner eine Mehrzahl von lokalen Strömungshindernissen 8 angeordnet, die zur lokalen Verwirbelung und Vermischung der Hochtemperaturschmelze 2 mit Wasser 7 führen, um dadurch lokale Dampfexplosionen herbeizuführen.

In FIG 2 ist nun ein Zustand dargestellt, bei dem Hochtemperaturschmelze 2 auf die Ausbreitungsfläche 3 geflossen ist. Dabei schließt die Hochtemperaturschmelze 2 das Wasser gewissermaßen blasenförmig ein, die Strömungshindernisse 8 sorgen dafür, daß die Wassereinschlüsse 10 unterteilt sind, so daß die daraus resultierenden Dampfexplosionen lokalisiert und mit nur relativ geringer Energie ablaufen.

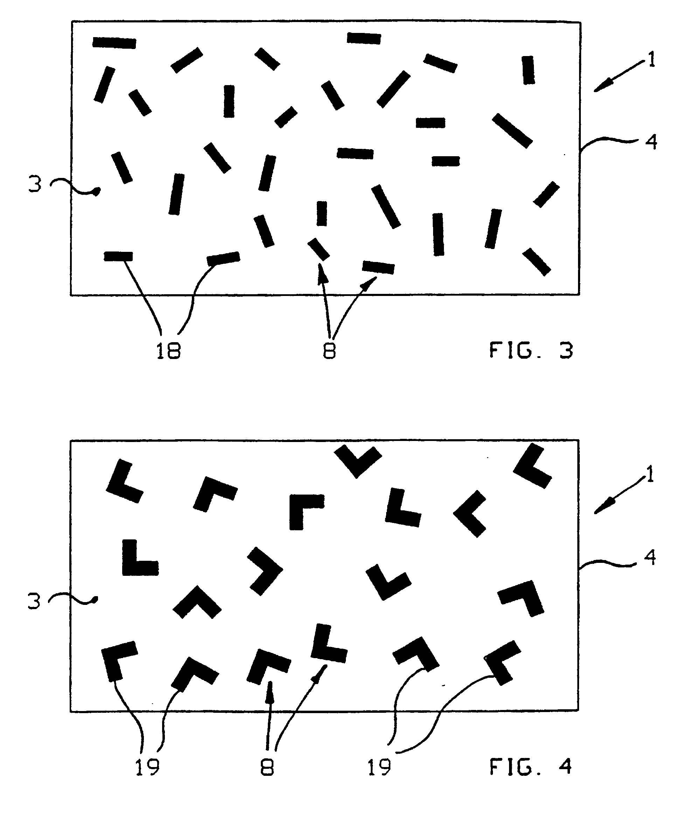

In FIG 3 sind die Strömungshindernisse 8 als leistenartige Elemente 18 und damit stabartig ausgebildet.

FIG 4 zeigt auf der Ausbreitungsfläche 3 aufliegende Winkelelemente 19 als Strömungshindernisse 8. Die Strömungshindernisse 8 in den FIG 3 und 4 sind unregelmäßig auf der Ausbreitungsfläche 3 angeordnet.

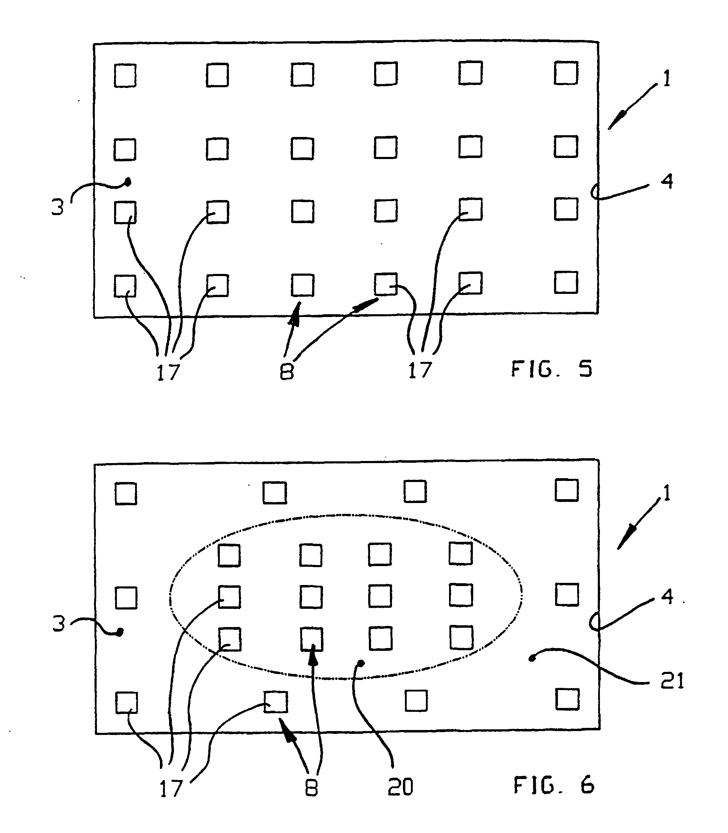

In FIG 5 sind würfelartige Elemente 17 als Strömungshindernisse 8 in regelmäßigem Abstand über der Ausbreitungsfläche 3 verteilt.

FIG 6 zeigt ebenfalls würfelartige Elemente 17 als Strömungshindernisse 8, wobei in einem Innenbereich 20 die Strömungshindernisse 8 enger zueinander beabstandet sind als in einem Außenbereich 21.

In FIG 7 sind die Strömungshindernisse 8 nach Art von Absenkungen 30 in der Ebene der Ausbreitungsfläche 3 angeordnet. Sie weisen die Form von flachen, im wesentlichen kantenlos in die Ebene der Ausbreitungsfläche 3 übergehenden Ausmuldungen 30 auf. Ferner ist dargestellt, daß in den Ausmuldungen 30 Erhebungen vorgesehen sind, die zu einer zusätzlichen Verwirbelung der Hochtemperaturschmelze 2 im Bereich der Absenkungen 30 führen.

## Patentansprüche

1. Auffangeinrichtung (1) zur Aufnahme eines hocherhitzten, zumindest teilweise fließfähigen Materials, wie z.B. Flüssigkeit, Schlacke, Schmelze und dergleichen, insbesondere Schmelzeauffangeinrichtung für Hochtemperaturschmelze (2) aus dem Reaktorbereich eines Kernkraftwerks, mit mindestens einer im wesentlichen horizontalen Ausbreitungsfläche (3), die unter einem das hocherhitzte Material abgebenden Element angeordnet ist,
**dadurch gekennzeichnet, dass** das hocherzitzte Material auf der gesamten Ausbreitungsfläche (3) entlang strömbar ist und dass auf der Ausbreitungsfläche (3) eine Mehrzahl voneinander beabstandeter Strömungshindernisse (8) für das hocherhitzte Material zur Erzeugung von Verwirbelungen im hocherhitzten Material angeordnet ist.

2. Auffangeinrichtung nach Anspruch 1,
**dadurch gekennzeichnet, daß** die Ausbreitungsfläche (3) eine wannenartige Berandung (4) aufweist.

3. Auffangeinrichtung nach einem der vorhergehenden Ansprüche,
**dadurch gekennzeichnet, daß** die Strömungshindernisse (8) auf der Ausbreitungsoberfläche (3) in einem regelmäßigen Raster angeordnet sind.

4. Auffangeinrichtung nach einem der Ansprüche 1 oder 2,
**dadurch gekennzeichnet, daß** die Strömungshindernisse (8), zumindest bereichsweise auf der Oberfläche zueinander unterschiedliche Abstände aufweisen,

5. Auffangeinrichtung nach einem der vorhergehenden Ansprüche,
**dadurch gekennzeichnet, daß** die Strömungshindernisse (8) mit dem Material der Ausbreitungsfläche (3) einstückig ausgebildet sind.

6. Auffangeinrichtung nach einem der Ansprüche 1 - 4,
**dadurch gekennzeichnet, daß** die Strömungshindernisse (8) auf die Ausbreitungsfläche (3) aufgesetzt und mit dieser lösbar verbunden sind.

7. Auffangeinrichtung nach einem der vorhergehenden Ansprüche,
**dadurch gekennzeichnet, daß** die Strömungshindernisse (8) unterschiedliche Dimensionen, insbesondere unterschiedliche Höhen aufweisen.

8. Auffangeinrichtung nach einem der vorhergehenden Ansprüche;
**dadurch gekennzeichnet, daß** die Strömungshindernisse (8, 18) stabartig ausgebildet sind.

9. Auffangeinrichtung nach einem der Ansprüche 1 - 7,
**dadurch gekennzeichnet, daß** die Strömungshindernisse (8, 17) block- oder würfelartig ausgebildet sind.

10. Auffangeinrichtung nach einem der Ansprüche 1 - 7,
**dadurch gekennzeichnet, daß** die Strömungshindernisse (8) nach Art von auf der Ausbreitungsfläche (3) aufliegenden Winkelelementen (19) ausgebildet sind.

11. Auffangeinrichtung nach einem der vorhergehenden Ansprüche,
**dadurch gekennzeichnet, daß** die Strömungshindernisse (8) zumindest bereichsweise im wesentlichen zueinander parallel verlaufen.

12. Auffangeinrichtung nach einem der Ansprüche 1 - 5,
**dadurch gekennzeichnet, daß** die Strömungshindernisse (8) nach Art von Absenkungen (30) in der Ebene der Ausbreitungsfläche (3) ausgebildet sind.

13. Auffangeinrichtung nach Anspruch 12,
**dadurch gekennzeichnet, daß** die Absenkungen (30) die Form von flachen, im wesentlichen kantenlos in die Ebene der Ausbreitungsfläche (3) übergehenden Ausmuldungen ausgebildet sind.

14. Auffangeinrichtung nach einem der Ansprüche 12 und 13,
**dadurch gekennzeichnet, daß** die Ausmuldungen (30) in einem regelmäßigen Abstand oder nach einem regelmäßigen Muster auf der Ausbreitungsfläche (3) angeordnet sind.

15. Auffangeinrichtung nach einem der Ansprüche 12 - 14,
**dadurch gekennzeichnet, daß** im Bereich der Ausmuldungen (30), zumindest teilweise, Erhebungen vorgesehen sind.

## Claims

1. Collector (1) for containing a highly heated, at least partially fluid material such as, e.g., liquid, slag, molten mass and the like, in particular, molten-mass collector for high-temperature molten mass (2) from the reaction region of a nuclear power station, with at least one substantially horizontal diffusion surface (3) which is disposed beneath the element delivering the highly heated material, **characterized in that** the highly heated material is capable of flowing along the entire diffusion surface (3) and there is disposed on the diffusion surface (3) a plurality of flow obstacles (8) for the highly heated material, spaced apart from one another, for generating vortices in the highly heated material.

2. Collector according to Claim 1, **characterized in that** the diffusion surface (3) has a tank-type periphery (4).

3. Collector according to one of the preceding Claims, **characterized in that** the flow obstacles (8) are disposed on the diffusion surface (3) in a regular grid.

4. Collector according to one of Claims 1 or 2, **characterized in that** the flow obstacles (8) are differently spaced in relation to one another on at least regions of the surface.

5. Collector according to one of the preceding Claims, **characterized in that** the flow obstacles (8) are fashioned as a single piece with the material of the diffusion surface (3).

6. Collector according to one of Claims 1 - 4, **characterized in that** the flow obstacles (8) are placed on the diffusion surface (3) and are detachably joined to it.

7. Collector according to one of the preceding Claims, **characterized in that** the flow obstacles (8) are of different dimensions, in particular, of different heights.

8. Collector according to one of the preceding Claims, **characterized in that** the flow obstacles (8, 18) are fashioned in the form of bars.

9. Collector according to one of Claims 1 - 7, **characterized in that** the flow obstacles (8, 17) are fashioned in the form of blocks or cubes.

10. Collector according to one of Claims 1 - 7, **characterized in that** the flow obstacles (8) are fashioned in the manner of angle elements (19) supported on the diffusion surface (3).

11. Collector according to one of the preceding Claims, **characterized in that** the flow obstacles (8) run substantially parallel to one another, at least in regions.

12. Collector according to one of Claims 1 - 5, **characterized in that** the flow obstacles (8) are fashioned in the manner of depressions (30) in the plane of the diffusion surface (3).

13. Collector according to Claim 12, **characterized in that** the depressions (30) are fashioned in the form of flat cavities which merge, substantially without an edge, into the plane of the diffusion surface (3).

14. Collector according to one of Claims 12 and 13, **characterized in that** the cavities (30) are disposed on the diffusion surface (3) with a regular spacing or according to a regular pattern.

15. Collector according to one of Claims 12 - 14, **characterized in that** elevations are provided, at least partially, in the region of the cavities (30).

## Revendications

1. Dispositif (1) collecteur, destiné à recueillir un matériau au moins partiellement fluide fortement chauffé tel que, par exemple, du liquide, des scories, des masses fondues et analogue, notamment dispositif collecteur de masses (2) fondues à hautes températures provenant de la zone du réacteur d'une centrale nucléaire, comprenant au moins une surface (3) sensiblement horizontale d'étalement, qui est disposée en-dessous d'un élément cédant le matériau fortement chauffé,
**caractérisé en ce que** le matériau fortement chauffé peut s'écouler le long de toute la surface (3) d'étalement et **en ce qu'**il est prévu sur la surface (3) d'étalement une multiplicité d'obstacles (8) à l'écoulement du matériau fortement chauffé, à distance les uns des autres, en vue d'obtenir des tourbillons dans le matériau fortement chauffé.

2. Dispositif collecteur suivant la revendication 1, **caractérisé en ce que** la surface (3) d'étalement comporte une bordure (4) en forme de cuvette.

3. Dispositif collecteur suivant l'une des revendications précédentes, **caractérisé en ce que** des obstacles (8) à l'écoulement sont disposés sur la surface (3) d'étalement suivant une trame régulière.

4. Dispositif collecteur suivant l'une des revendications 1 ou 2, **caractérisé en ce que** les obstacles (8) à l'écoulement sont au moins par endroits sur la surface à des distances différentes les unes des autres.

5. Dispositif collecteur suivant l'une des revendications précédentes, **caractérisé en ce que** les obstacles (8) à l'écoulement sont d'un seul tenant avec le matériau de la surface (3) d'étalement.

6. Dispositif collecteur suivant l'une des revendications 1 à 4, **caractérisé en ce que** les obstacles (8) à l'écoulement sont posés sur la surface (3) d'étalement et y sont reliés de manière amovible.

7. Dispositif collecteur suivant l'une des revendications précédentes, **caractérisé en ce que** les obstacles (8) à l'écoulement ont des dimensions différentes, notamment des hauteurs différentes.

8. Dispositif collecteur suivant l'une des revendications précédentes, **caractérisé en ce que** les obstacles (8, 18) à l'écoulement sont constitués sous la forme de barreaux.

9. Dispositif collecteur suivant l'une des revendications 1 à 7, **caractérisé en ce que** les obstacles (8, 17) à l'écoulement sont constitués sous la forme de blocs ou de dés.

10. Dispositif collecteur suivant l'une des revendications 1 à 7, **caractérisé en ce que** les obstacles (8) à l'écoulement sont constitués sous la forme d'éléments (19) en équerre s'appliquant sur la surface (3) d'étalement.

11. Dispositif collecteur suivant l'une des revendications précédentes, **caractérisé en ce que** les obstacles (8) à l'écoulement s'étendent au moins par endroits sensiblement parallèlement les uns aux autres.

12. Dispositif collecteur suivant l'une des revendications 1 à 5, **caractérisé en ce que** les obstacles (8) à l'écoulement sont constitués à la façon de creusures (30) dans le plan de la surface (3) d'étalement.

13. Dispositif collecteur suivant la revendication 12, **caractérisé en ce que** les creusures (30) sont constitués sous la forme de cuvettes plates se transformant sensiblement sans arête en le plan de la surface (3) d'étalement.

14. Dispositif collecteur suivant l'une des revendications 12 et 13, **caractérisé en ce que** les cuvettes (30) sont disposées à une distance régulière ou suivant un modèle régulier sur la surface (3) d'étalement.

15. Dispositif collecteur suivant l'une des revendications 12 à 14, **caractérisé en ce que** dans la zone des cuvettes (30) sont prévues, au: moins en partie, des parties saillantes.
